# EUROPEAN PATENT SPECIFICATION

(11) **EP 0 443 833 B1**
(45) Date of publication and mention of the grant of the patent: **04.09.1996**
(21) Application number: 91301341.3
(22) Date of filing: 20.02.1991
(51) Int. Cl.: H04N 1/32, H04N 1/23

(54) **Image communication apparatus**
Bildübertragungsgerät
Dispositif de communication d'images

(30) Priority: 23.02.1990 JP 41060/90
(43) Date of publication of application: 28.08.1991
(73) Proprietor: CANON KABUSHIKI KAISHA, Tokyo (JP)
(72) Inventor: Saito, Atsushi, c/o Canon Kabushiki Kaisha, Ohta-ku, Tokyo (JP)
(74) Representative: Beresford, Keith Denis Lewis

(56) References cited:
- US-A- 4 519 081
- PATENT ABSTRACTS OF JAPAN vol. 14, no. 174 (M-959)5 April 1990 & JP-A-2 029 360
- PATENT ABSTRACTS OF JAPAN vol. 9, no. 8 (E-289)12 January 1985 & JP-A-59 158 172
- PATENT ABSTRACTS OF JAPAN vol. 9, no. 35 (E-296)14 February 1985 & JP-A-59 178 868

## Description

### BACKGROUND OF THE INVENTION

### Field of the Invention

This invention relates to an image communication apparatus such as a facsimile apparatus and, more particularly, to an image communication apparatus provided with an ink jet printer having a plurality of ink ejection orifices.

### Related Background Art

Recently, ink jet printers have been developed, which perform recording of characters and images with ink ejected from orifices onto a recording medium by using bubbles generated by heat energy. In such printer, heat-generating resistors (or heaters) are provided inside the individual orifices. These resistors are far small in size compared to piezoelectric elements used for conventional ink jet printers. Thus, it is possible to arrange orifices in a high density multiplex array, thus permitting high quality recorded image to be obtained as well as permitting operation speed increase and noise reduction.

Meanwhile, facsimile apparatus is required to be capable of not only high speed transmission of image but also high speed reception of image of higher quality. The ink jet printer as noted above, which has the above features, is thought to meet these demands. However, up to date there is no facsimile apparatus which is provided with such ink jet printer.

In this type of ink jet printer, it is in practice to take measures for preventing ink ejected onto and fixed on recording paper from being transferred onto the next recording paper when the next recording paper is overlapped over the first-mentioned recording paper. Such measure requires a time (i.e., a fixing time) of about 30 seconds in case when image is recorded.

However, with a facsimile apparatus where recording paper discharged after recording onto a predetermined tray are stacked one after another, each recording paper is discharged and stacked onto previously discharged recording papers on the tray in about 15 seconds with a so-called G3 procedure. Therefore, it is difficult to assemble an ink jet printer of the above type in a facsimile apparatus.

The prevent invention has as one concern to provide an improved video communication apparatus.

Japanese Patent Specification No. JP-A-2,029,360 discloses an ink jet printer in which a fixing heater is used to accelerate the fixation of ink on a sheet of paper. When an instruction for back feeding is applied movement of the sheet is stopped for a predetermined time.

Japanese Patent Specification No. JP-A-59,158,172 discloses detecting the storage capacity in a transmission system and only allowing the reception of additional data when adequate storage capacity has been detected.

Neither of the above two disclosures provide a solution to the problem with which the present application is concerned.

In accordance with the present invention there is provided image communication apparatus as set out in claim 1.

In order that the present invention may be more readily understood, an embodiment thereof will now be described by way of example and with reference to the accompanying drawings, in which:
Figure 1 is a perspective view showing an ink jet cartridge capable of incorporation of the invention;
Figure 2 is a sectional view showing the construction of an embodiment of the invention;
Figure 3 is a block diagram showing electrical construction of the same embodiment;
Figure 4 is a view showing part of a G3 (or general) procedure in the same embodiment; and
Figure 5 is a flow chart showing an example of operation of the same embodiment.

### DETAILED DESCRIPTION OF THE PREFERRED EMBODIMENTS

Now, an embodiment of the invention will be described in detail with reference to the drawings.

### Construction of Recording System (or Printer)

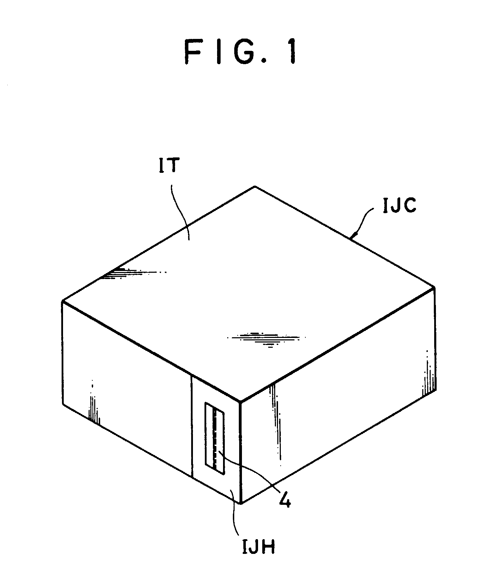

Figure 1 shows an example of ink jet recording unit suitable as recording system of a facsimile apparatus incorporating the invention. Referring to the Figure, designated at IJH is an ink jet head (or recording head) of a type utilizing heat energy to cause ejection of ink, and at IJC is an ink jet cartridge integral with ink jet head IJH and provided with ink tank IT for supplying ink thereto. Ink jet cartridge IJC can be mounted.

In ink jet cartridge IJC of this embodiment, ink jet head IJH has an end slightly projecting from the front end face of ink tank IT. This ink jet cartridge is of disposable type capable of mounted on and secured to and dismounted from a carraige provided in a facsimile apparatus body to be described later.

Ink tank IT, in which ink to be supplied to ink jet head IJH, comprises an ink absorbing member, a container, into which the ink absorbing member is inserted, and a lid member for sealing the container (none of these members being shown). Ink tank IT is filled with ink, which is supplied to the ink jet head according to ink ejection.

In this embodiment, ceiling plate 4 is made of an excellently ink-resistant resin such as polysulfon, polyether sulfon, polyphenylene oxide and polypropyrene.

Ink jet cartridge IJC having the above construction is detachably mounted in a predetermined way on a carriage of facsimile apparatus as will be described later, and it forms desired recorded image on recording medium with relative movement of the carriage and recording medium caused according to provision of predetermined recording signal.

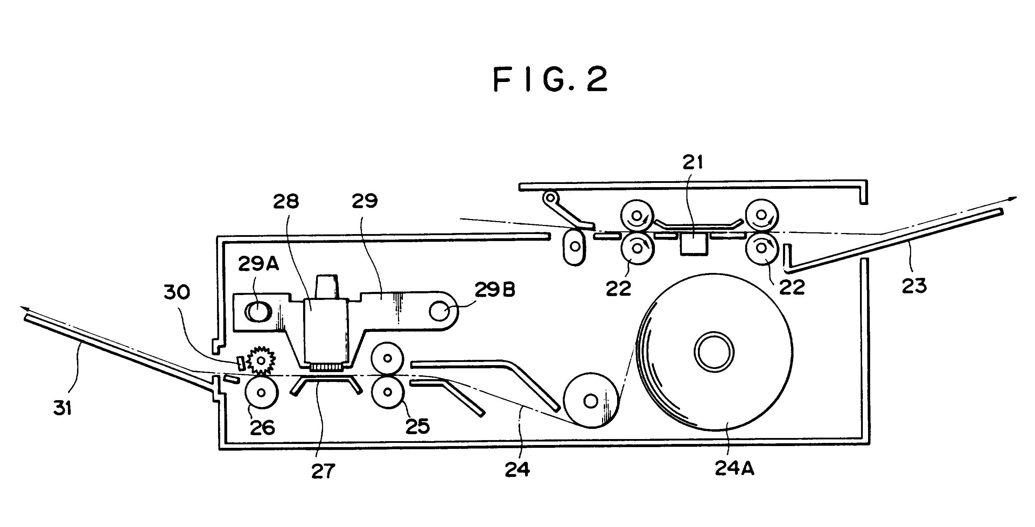

Figure 2 is a sectional view showing the mechanical construction of a facsimile apparatus as an embodiment of the invention. Designated at 21 is an image sensor of close contact type. The image sensor reads out original fed by feed rollers 22 to a predetermined position and converts the read-out image of original into electric signal. The electric signal thus obtained is processed in a manner as will be described later before it is transmitted. Designated at 23 is an original tray.

Designated at 24A is a recording paper roller with recording paper wound thereon. Recording paper 24 which is paid off roll 24A is fed by feed rollers 25 and 26 to a position on platen 27, i.e., a recording position.

Designated at 28 is an ink jet head (or recording head) of ink jet head cartridge IJC. The head has a nozzle group facing the recording surface of recording paper 24 fed onto platen 27 for ink ejection. Designated at 29 is a head carriage HC carrying recording head 28. The head carriage HC is slidable along two parallel guide shafts 29A and 29B by a drive force transmitted from a driving motor (not shown) via a belt (not shown). Thus, it can execute reciprocation over the entire width of recording paper of recording head 28 to form image corresponding to received image data on recording paper 24 with ink ejected from recording head 28.

A head restoration unit (not shown) is disposed on the path of movement of recording head 28 at one end of the path, for instance an end corresponding to a home position of the head. Capping of head 28 is effected by driving the head restoration unit. An operation of restoring the ejection of ink from the head, such as removal of increased viscosity ink inside orifices, is performed by causing forced discharging of ink from the orifices in relation to capping of recording head 28 with a cap section of the head restoration unit. This is effected through ink absorption by suitable ink absorbing means (i.e., an absorbing pump) provided in the head restoration unit (this process being referred to as absorption restoration) or through forcing of ink by suitable forcing means provided in an ink supply path leading to recording head 28 (this process being referred to as forcing restoration). Capping is executed at the end of recording for protecting the recording head.

Designated at 30 is a paper cutter, which effects cutting to a length corresponding to one page of recording paper 24 discharged after recording of received data of one page on discharging tray.

### Construction of Control System

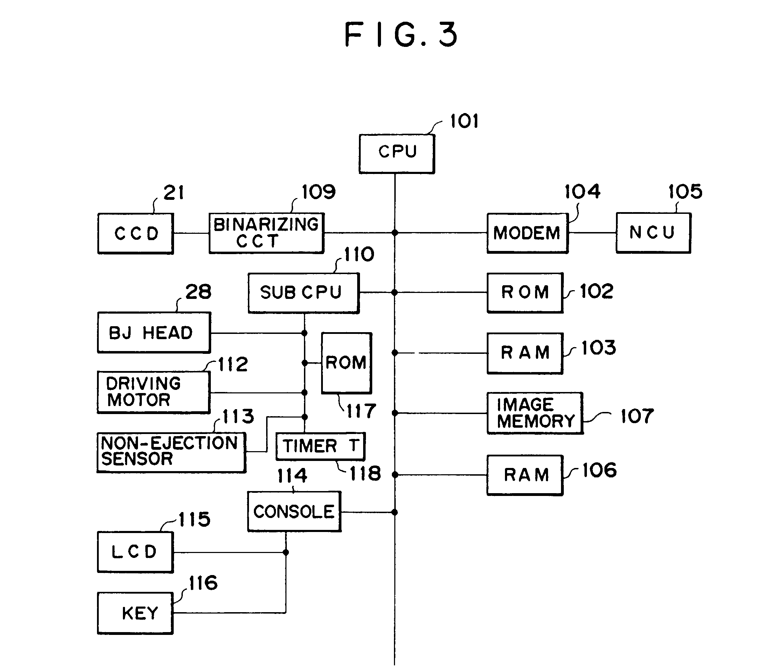

Figure 3 shows the circuit construction of the facsimile apparatus as embodiment of the invention. Referring to the Figure, designated at 101 is a main CPU (i.e., central processing unit) consisting of a microcomputer or the like for controlling the whole apparatus for data transmission and reception through buses. Designated at 102 is a ROM (i.e., read only memory) for storing control procedures (or programs) and so forth, and at 103 is a working RAM (i.e., random access memory) including counters and resistors used by a sub CPU to be described later for operation. Designated at 104 is a MODEM serving as modulation/demodulation unit for data transmission, at 105 a NCU (i.e., net control unit) connected to MODEM 104, which is thus connected through NCU 105 to telephone service line, at 106 is a RAM used for registering telephone numbers, abbreviations, etc., and at 107 is a RAM (or DRAM) for temporarily storing image data.

Designated at 21 is an image sensor of close contact type (for instance a CCD) serving as image sensor means of original reading system. The image sensor converts original image, which is focused through a focusing lens such as a rod lens, into electric signal. Designated at 109 is a binarizing circuit for binarizing the output signal of CCD 21.

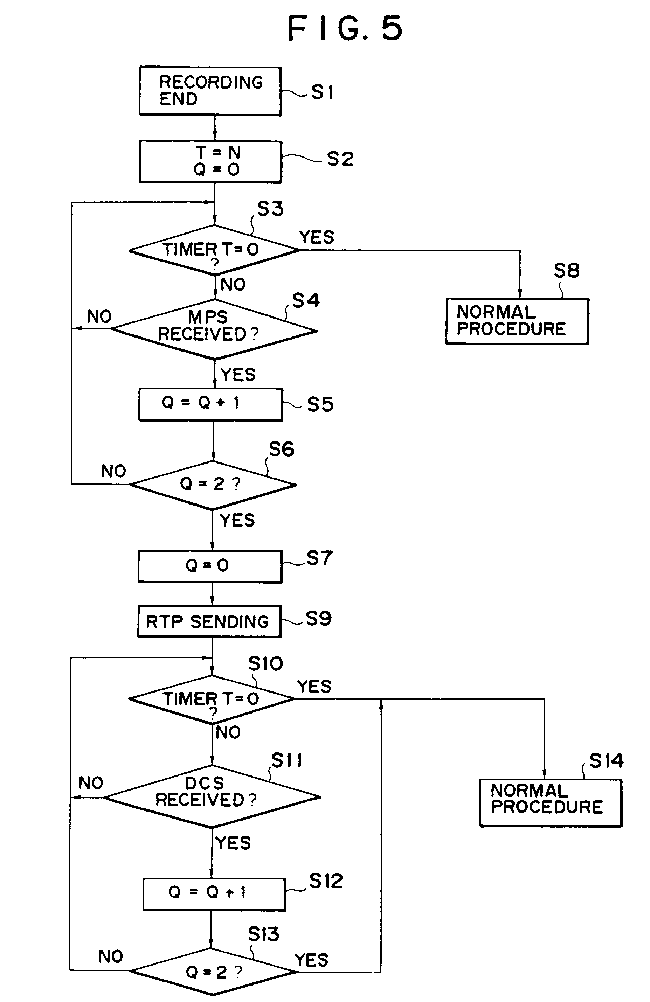

Designated at 110 is a sub CPU for controlling recording system bubble jet head (BJ head) 28, head carriage driving motor 112 and defective ink ejection sensor 113, at 117 is a ROM, in which a control program as shown in Figure 5 is stored, and at 118 a timer.

Designated at 114 is an operating unit including a key board and also an operation panel provided with a liquid crystal display (LCD) 115 and various keys 116.

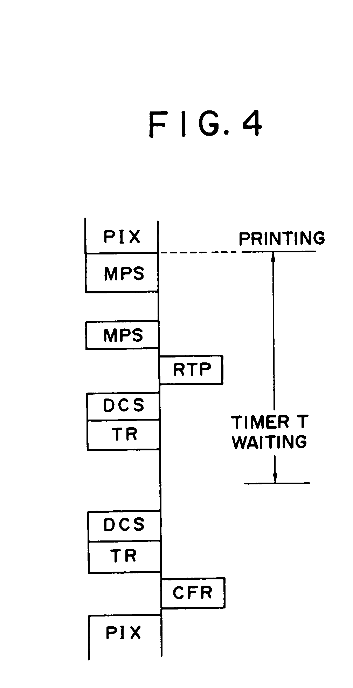

Control operation of this embodiment in connection with the discharging of recording paper during image reception in a G3 (i.e., general) mode will be described with reference to Figures 4 and 5.

Figure 4 shows operation of G3 (or general) procedure from an instant of end of recording (or printing) of one page of image data till reception of the next page of image data. Figure 5 is a flow chart illustrating this operation.

Referring to Figure 5, when recording of one page of received image data (PIX in Figure) is ended (step S1), the timer T is set to N (which corresponds to 30 seconds, for instance), and also received signal number counter Q is set to 0 (step S2). Then, whether the count of timer T is 0 is checked (step S3). If the count is not 0, the procedure goes to step S4 of check as to whether MPS signal from the transmitting side has been received. If the signal (i.e., first MPS signal in Figure 4) has been received, the procedure goes to step S5 of incrementing counter Q by +1. Then in step S6 a check is executed as to whether the count of counter Q is 2. If the count is not 2 (which corresponds to be after reception of the first MPS signal in Figure 4), the procedure goes back to step S3. In the example of Figure 4, the procedure goes through steps S3, S4 (reception of the second MPS signal) and S5 and then back to step S6. If it is found in this last step that Q = 2, then the procedure goes to step S7. If it is found in step S3 that T = 0, the procedure goes to step S8 of receiving the next page of image data (PIX) in normal procedure.

In step S7, the count of counter Q is initialized to 0, then in step S9 RTP signal is sent to the transmitting side, and the procedure goes to step S10. In step S10, whether the count of timer T is 0 is checked. If the count is not 0, whether DCS signal has been received from the transmitting side is checked. If the signal (i.e., the first DCS signal in Figure 4) has been received, the procedure goes to step S12 of incrementing the count of counter Q by +1 and then to step S13 of check as to whether Q = 2. If Q = 2 is negated (i.e., after reception of the first DPS signal in Figure 4), the procedure goes back to step S10. If the count of timer T becomes 0 during this time, the procedure goes to step S14 of receiving the next page of image data (PIX) in normal procedure. In the example of Figure 4, the procedure goes through steps S10, S11 (reception of the second DCS signal) and S12 and then back to step S13 again. Since Q = 2 at this time, the procedure goes to step S14 of sending out CFR signal to the transmitting side in normal procedure before receiving the next page of image data (PIX). Subsequently, the received image data is recorded on recording paper with ink ejection from the recording head, and recording paper is then discharged onto the discharging tray.

It will be appreciated that recording of the next page of image data on recording paper is not effected before lapse of a predetermined period of time (for instance 30 seconds) which is necessary for fixing of ink ejected onto recording paper from the ink jet head as noted above.

The invention is applicable to facsimile apparatuses using as recording system an ink jet recording apparatus of various ink jet recording systems, for instance a commonly termed piezeoelectric system using piezoelectric elements as source of ink ejection energy, and particularly excellent effects can be obtained when the invention is applied to recording heads and recording apparatuses of a system, in which ink is ejected from orifices according to changes in the state of ink produced with heat energy.

Typical construction and principle of such recording heads and apparatuses are suitably based on principles disclosed in United States patent Nos. US-A-4,723,129 and US-A-4,740,796. This system is of either commonly termed on-demand type or continuance type. Particularly, it may be effectively the non-demand type for the following reason. In this type of system, electricity-heat transducers which are disposed in correspondence to ink sheet or ink path retaining ink, are applied with at least one drive signal corresponding to recording data and providing for quick temperature rise to exceed nuclear boiling, thus causing generation of heat energy in the electricity-heat transducers to cause membraneous ebullition on heat-affected surface of the recording head. In consequence, bubbles are formed in ink in one-to-one correspondence to the drive signal. In correspondence to growth and shrinkage of these bubbles liquid (i.e., ink) is ejected through orifices to form at least one ink drop. By providing pulse signal as drive signal, the growth and shrinkage of bubbles are effected instantaneously and adequately. Doing so is more suitable in that ejection of liquid (i.e., ink) which is excellent in responce character can be attained. Such pulse drive signal is suitably those disclosed in United States patent Nos. US-A-4,463,359 and US-A-4,345,262. By adopting conditions concerning the rate of temperature rise of the heat-affected surface noted above as disclosed in United States patent No. US-A-4,313,124, further excellent recording can be obtained.

As for the construction of the recording head according to the invention, in addition to the combination structure including orifices, ink paths and electricity-heat transducers (either of straight or orthogonal ink paths) as shown above, there is also a structure as disclosed in United States patent Nos. US-A-4,558,333 and US-A-4,459,600, in which heat-affected sections are disposed in curved areas. Further, the effects of the invention are obtainable with recording heads such as those disclosed in Japanese Patent Laid-Open No. JP-A-59-123670, disclosing a structure in which a slit common to a plurality of electricity-heat transducers serves orifice section thereof, and also in Japanese Patent Laid-Open No. 59-138461, disclosing a structure, in which an opening for absorbing pressure wave of heat energy faces an orifice section. These structures permit reliable and efficient recording to be obtained irrespective of the form of recording head.

Further, the invention is effectively applicable to a recording head of full line type, having a length corresponding to the maximum width of recording medium capable of recording by recording apparatus. Such recording head may have either a structure, which meets the length with a combination of a plurality of recording heads, or a structure as a single integral recording head. Furthermore, the invention is effectively applicable in case of using a recording head of even serial type as noted above inasmuch as the head is of replaceable chip type, which permits electric connection to the apparatus body and supply of ink therefrom when it is mounted on the apparatus body, or of cartridge type provided integrally on a cartridge.

Further, for more stably obtaining the effects of the invention it is suitable to add restoring means and preliminary auxiliary means which are provided to recording head as elements of recording head. Specific examples of these means provided for the recording head are capping means, cleaning means, pressurizing or withdrawing means, electricity-heat transducers or separate heating elements or combination of these transducers and elements, and means for providing a preliminary ejection mode separately from recording. These means are effective for obtaining stable recording.

Still further, it is possible to provide a plurality of recording heads of the same kind or different kinds for respective different kinds of ink different in recording color and/or concentration in addition to a case of providing only a single recording head for mono-color ink.

## Claims

1. An image communication apparatus for printing image data received from another apparatus by means of an ink jet recording head (IJH) and comprising communication control means (104) having a receiving side for receiving from said another apparatus image data and procedure signals concerning communication with said another apparatus, and a transmitting side for sending signals to said another apparatus; and driving control means (110) for controlling the operation of said recording head to print received image data, and characterised in that the apparatus additionally comprises timer means (118) adapted to measure the predetermined period of time required for ink ejected onto a recording medium to become fixed after a page of received image data has been printed, and wherein said communication control means are adapted to control the sending to said transmitting side of a signal which enables reception of the next image data from said another apparatus in response either to the end of said predetermined period or to reception of a predetermined number of procedure signals from said another apparatus prior to the end of said period.

2. Apparatus according to claim 1, wherein said communication control means inhibits sending to the transmitting side of a signal (CFR) indicative of readiness of reception during the time measuring operation of said timer means, said signal (CFR) being sent out to the transmitting side in accordance with the end of the time measuring operation of said timer means.

3. Apparatus according to claim 2, wherein said predetermined procedure signal is a procedure signal (DCS) for selection of a receiving mode and instruction of reception.

4. Apparatus according to any one of claims 1 to 3, wherein said ejection energy generating elements generate heat energy and produce a change in the state of ink with heat generated from them, ink being ejected from orifices in accordance with said state change to form flying ink drops.

5. Apparatus according to claim 4, wherein said state change accompanies generation of bubbles caused by membraneous ebullition.

## Patentansprüche

1. Bildübertragungsgerät zum Drucken von von einem anderen Gerät empfangenen Bilddaten unter Verwendung eines Tinten-strahl-Aufzeichnungskopfs (IJH), mit
einer Übertragungssteuereinrichtung (104) mit einer Empfangsseite zum Empfang von Bilddaten und die Übertragung von dem anderen Gerät betreffenden Verarbeitungssignalen von dem anderen Gerät und einer Sendeseite zum Senden von Signalen zu dem anderen Gerät und
einer Ansteuerungseinrichtung (110) zur Steuerung des Betriebs des Aufzeichnungskopfs, um empfangene Bilddaten zu drucken,
**gekennzeichnet durch**
eine Zeitmeßeinrichtung (118) zur Messung eines zum Fixieren von auf einen Aufzeichnungsträger ausgestoßener Tinte erforderlichen vorbestimmten Zeitabschnitts, nachdem eine Seite empfangener Bilddaten gedruckt wurde, wobei die Übertragungssteuereinrichtung das Senden eines Signals zu der Sendeseite steuert, das entweder auf das Ende des vorbestimmten Zeitabschnitts oder auf den Empfang einer vorbestimmten Anzahl von Verarbeitungssignalen von dem anderen Gerät vor dem Ende des Zeitabschnitts hin den Empfang darauffolgender Bilddaten von dem anderen Gerät ermöglicht.

2. Gerät nach Anspruch 1,
**dadurch gekennzeichnet, daß**
die Übertragungssteuereinrichtung das Senden eines Signals (CFR) zu der Sendeseite verhindert, das eine Empfangsbereitschaft während des Zeitmeßvorgangs der Zeitmeßeinrichtung anzeigt, wobei das Signal (CFR) entsprechend dem Ende des Zeitmeßvorgangs der Zeitmeßeinrichtung zu der Sendeseite gesendet wird.

3. Gerät nach Anspruch 2,
**dadurch gekennzeichnet, daß**
das vorbestimmte Verarbeitungssignal ein Verarbeitungssignal (DCS) zur Auswahl einer Empfangsbetriebsart und zur Anweisung eines Empfangs ist.

4. Gerät nach einem der Ansprüche 1 bis 3,
**dadurch gekennzeichnet, daß**
Ausstoßenergie erzeugende Elemente Wärmeenergie erzeugen und mittels der erzeugten Wärme eine Änderung des Zustands der Tinte bewirken, wobei entsprechend der Zustandsänderung Tinte aus den Öffnungen ausgestoßen wird, so daß fliegende Tintentröpfchen ausgebildet werden.

5. Gerät nach Anspruch 4,
**dadurch gekennzeichnet, daß**
die Zustandsänderung mit einer durch ein Filmsieden verursachten Erzeugung von Bläschen verbunden ist.

## Revendications

1. Appareil de transmission d'images pour imprimer des données d'images reçues d'un autre appareil au moyen d'une tête (IJH) d'enregistrement à jet d'encre et comprenant des moyens (104) de commande de transmission ayant un côté récepteur pour recevoir dudit autre appareil des données d'images et des signaux de procédure concernant les transmissions avec ledit autre appareil, et un côté émetteur pour envoyer des signaux vers ledit autre appareil; et
des moyens (110) de commande d'attaque pour commander le fonctionnement de ladite tête d'enregistrement pour qu'elle imprime des données d'images reçues, et caractérisé en ce que l'appareil comprend en outre des moyens (118) temporisateurs conçus pour mesurer le temps prédéterminé qui est nécessaire pour que l'encre éjectée sur le support d'enregistrement se fixe après qu'une page de données d'images reçues a été imprimée, et dans lequel lesdits moyens de commande de transmission sont conçus pour commander l'envoi vers ledit côté émetteur d'un signal qui permet la réception des données d'images suivantes dudit autre appareil en réponse soit à la fin dudit temps prédéterminé, soit à la réception d'un nombre prédéterminé de signaux de procédure dudit autre appareil avant la fin de ladite période.

2. Appareil selon la revendication 1, dans lequel lesdits moyens de commande de transmission inhibent l'envoi au côté émetteur d'un signal (CFR) représentatif du fait qu'une réception est possible pendant l'opération de mesure de temps desdits moyens temporisateurs, ledit signal (CFR) étant envoyé vers le côté émetteur en synchronisme avec la fin de l'opération de mesure de temps desdits moyens temporisateurs.

3. Appareil selon la revendication 2, dans lequel ledit signal de procédure prédéterminé est un signal de procédure (DCS) pour la sélection d'un mode de réception et d'une instruction de réception.

4. Appareil selon l'une quelconque des revendications 1 à 3, dans lequel lesdits éléments générateurs d'énergie d'éjection produisent de l'énergie thermique et produisent une variation d'état de l'encre du fait de la chaleur produite, de l'encre étant éjectée par des orifices en synchronisme avec ledit changement d'état pour former des gouttelettes d'encre volantes.

5. Appareil selon la revendication 4, dans lequel ledit changement d'état accompagne la production de bulles provoquée par une ébullition membraneuse.
